# EUROPEAN PATENT APPLICATION

(11) **EP 2 838 029 A1**
(43) Date of publication of application: **18.02.2015**
(21) Application number: 13775195.4
(22) Date of filing: 01.04.2013
(51) Int. Cl.: G06F 13/00, G06F 3/048

(54) **INFORMATION PROCESSING SYSTEM AND MEDIA SERVER**

(30) Priority: 13.04.2012 JP 2012091809
(71) Applicant: Sony Computer Entertainment Inc., Tokyo 108-0075 (JP)
(72) Inventor: OHASHI, Yoshinori, Tokyo 108-0075 (JP); SHIBUYA, Kiyoto, Tokyo 108-0075 (JP); KAWAHARA, Hiroyuki, Tokyo 108-0075 (JP)
(74) Representative: Turner, James Arthur
(86) International application number: PCT/JP2013/002223
(87) International publication number: WO 2013/153767

(57) **Abstract**

In a media server, a storage unit 50 records content. A status management unit 32 acquires status information related to the media server from inside or outside. By referencing an icon table, an icon selection unit 34 selects an icon image corresponding to the acquired status information. When an icon providing unit 36 provides the selected icon image to an information processing device, the information processing device displays the provided icon image on a menu screen.

## Description

### [Technical Field]

The present invention relates to an information processing technology for an information processing system having a server and a client interconnected via a network.

### [Background Art]

Wide acceptance has been gained by PVRs (Personal Video Recorders) that record images such as TV broadcasts using hard disk drives. Today's PVRs support both terrestrial and satellite digital broadcasting. Users can record desired TV programs by manipulating a user interface.

In recent years, it has been general practice to set up a storage system in the household where a computer network is connected with a NAS (Network Attached Storage). The NAS is a file server equipped with hard disk drives and provides content files to client devices via a TCP/IP network. In the storage system, the content recorded by the PVR may be transferred to the NAS via the network and the NAS may act as a media server managing the content.

### [Summary]

### [Technical Problem]

In such a storage system, the PVR need not store the recorded content and thus need only function as a tuner in practical terms. Although the PVR is furnished with diverse functions so that it may operate on a standalone basis, if the NAS can manage the content in centralized fashion, the functions incorporated in the PVR constitute over-specification since they are not fully utilized. Another problem is that because the PVR and the NAS need to be different pieces of hardware, they take up more installation space.

With a view to solving these problems, the inventors have devised a novel information processing system. This information processing system is desired to provide a user operating a client with a user interface that permits an intuitive understanding of media server status.

Thus an object of this invention is to provide information processing technology that allows the user to have an easy understanding of media server status.

### [Solution to Problem]

In solving the problems above and according to one embodiment of the present invention, there is provided an information processing system including a media server and an information processing device interconnected with one another via a network. The media server includes: a storage unit configured to record content; a status management unit configured to acquire status information related to the media server; and an icon selection unit configured to select an icon image corresponding to the status information acquired by the status management unit. The information processing device includes: an icon acquisition unit configured to acquire the icon image selected by the media server; and a display processing unit configured to generate display data for displaying the acquired icon image.

According to another embodiment of the present invention, there is provided a media server for distributing content. The media server includes: a status management unit configured to acquire status information related to the media server; an icon selection unit configured to select an icon image corresponding to the status information acquired by the status management unit; and an icon providing unit configured to provide the selected icon image.

Incidentally, if other combinations of the above-outlined composing elements and the above expressions of the present invention are converted between different forms such as a method, a device, a system, a recording medium, and a computer program, they still constitute effective embodiments of this invention.

### [Brief Description of Drawings]

[Fig. 1]

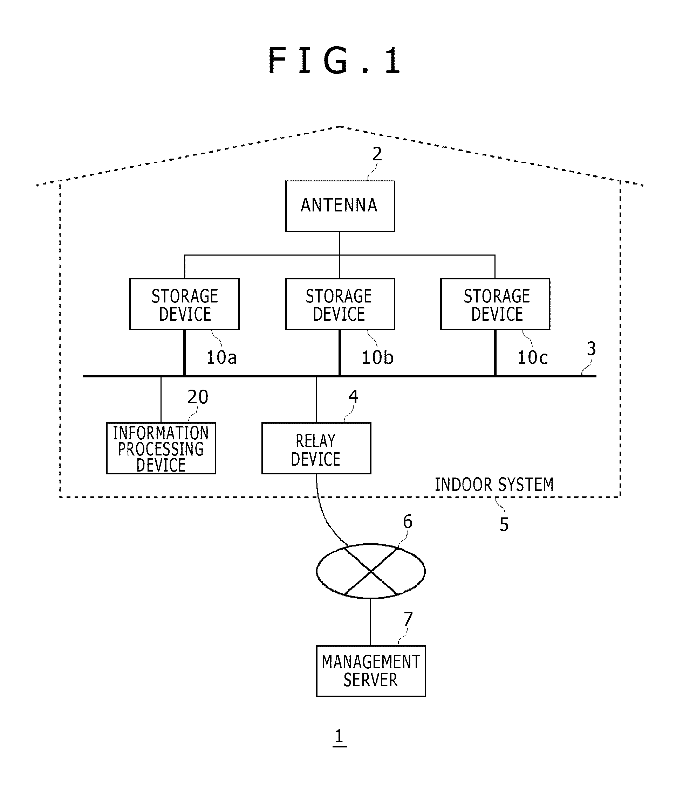

   Fig. 1 is a diagram outlining a configuration of an information processing system as an embodiment of the present invention.
[Fig. 2]

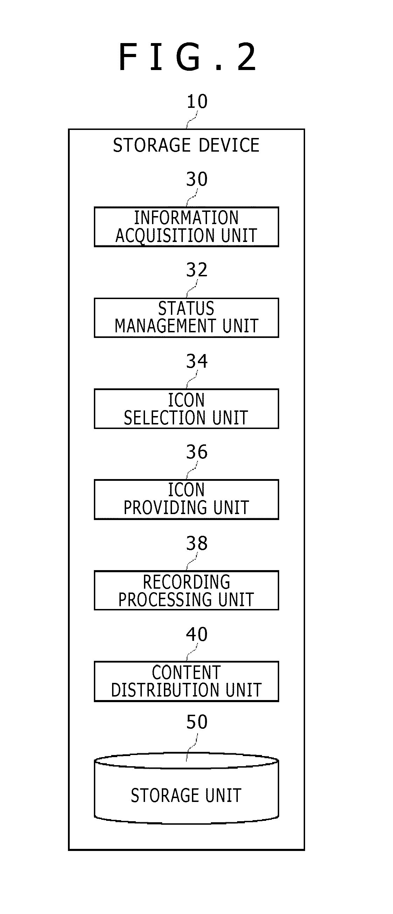

   Fig. 2 is a diagram showing functional blocks of a storage device.
[Fig. 3]

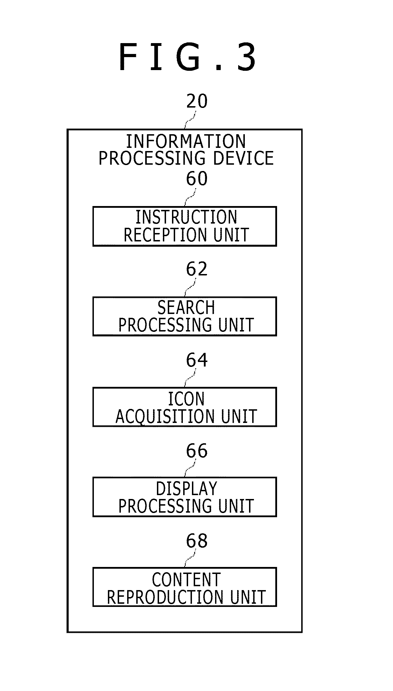

   Fig. 3 is a diagram showing functional blocks of an information processing device.
[Fig. 4]

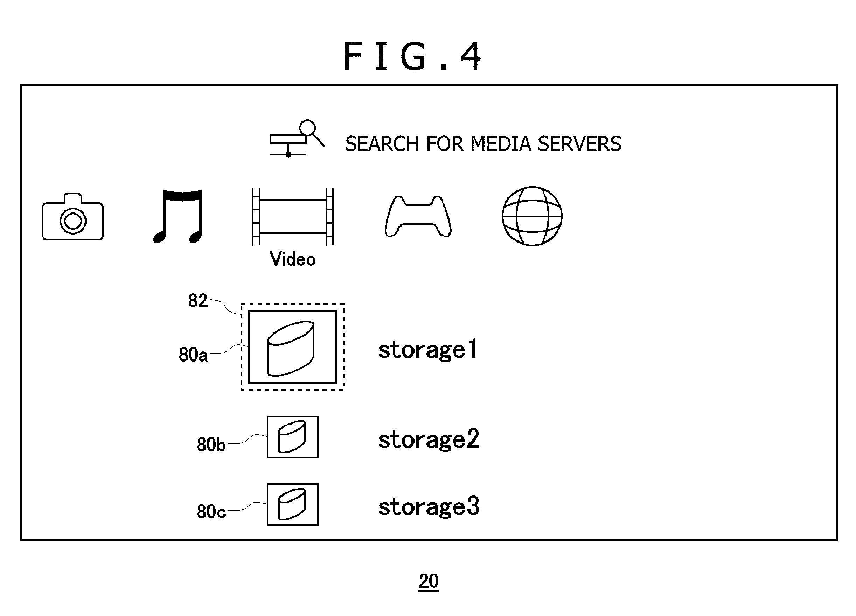

   Fig. 4 is a diagram explaining a basic structure of a menu screen.
[Fig. 5]

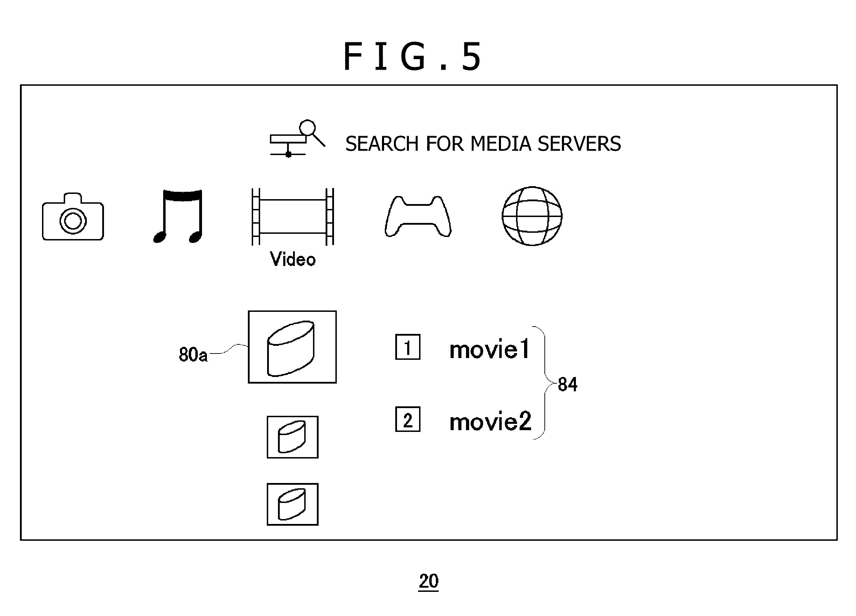

   Fig. 5 is a diagram explaining a basic structure of a menu screen for displaying a content list.
[Fig. 6]

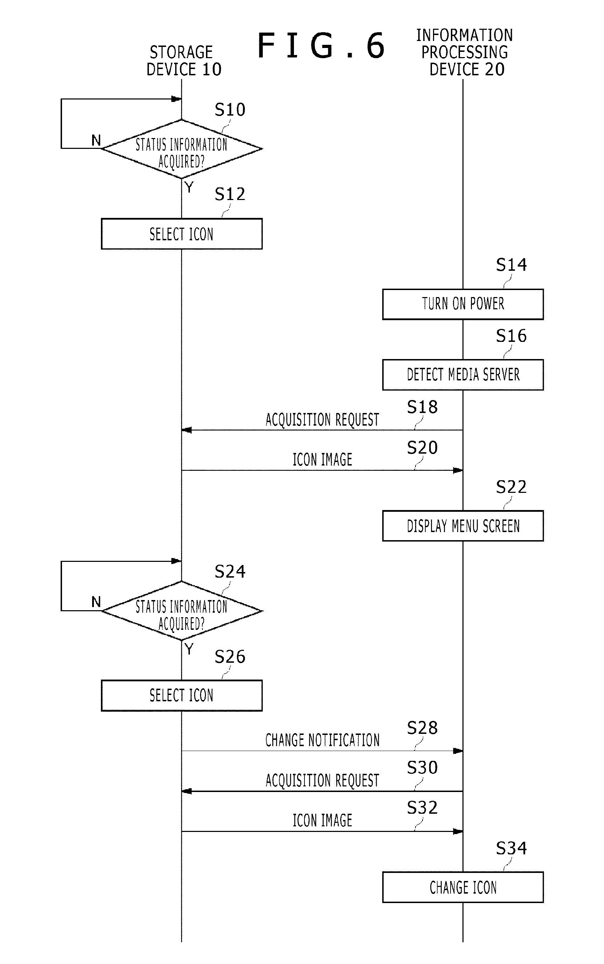

   Fig. 6 is a flowchart of an icon setting process performed by the storage device.
[Fig. 7]

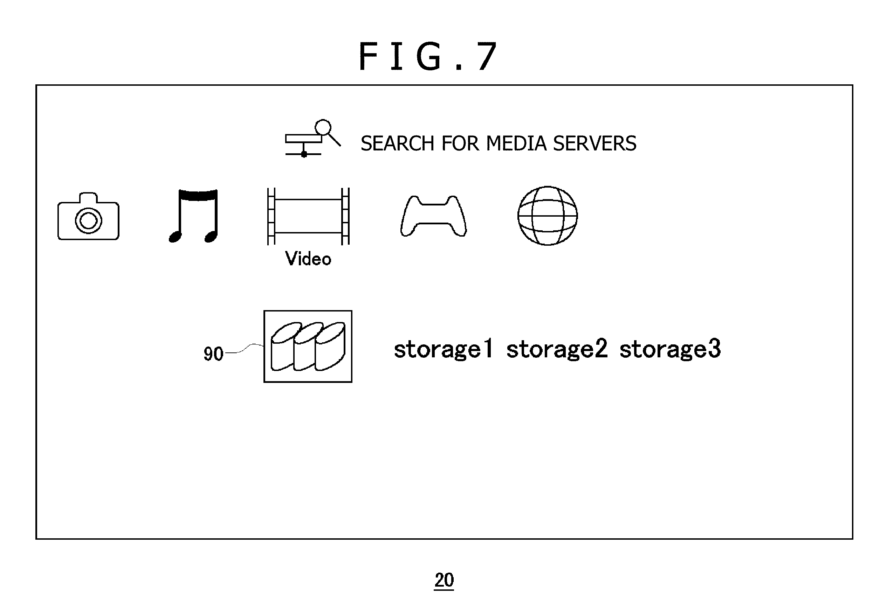

   Fig. 7 is a diagram showing a typical media server icon.
[Fig. 8]

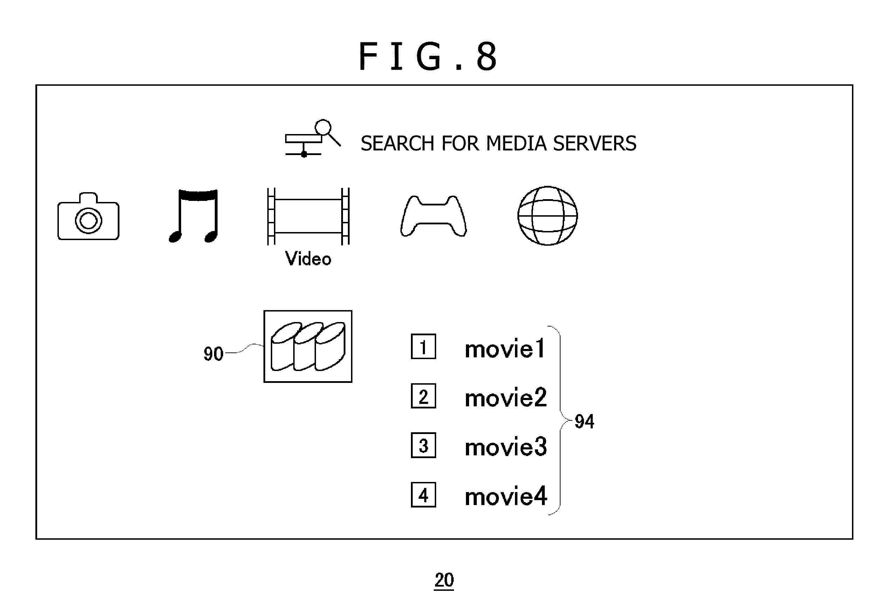

   Fig. 8 is a diagram showing a typical menu screen for displaying a content list.
[Fig. 9]

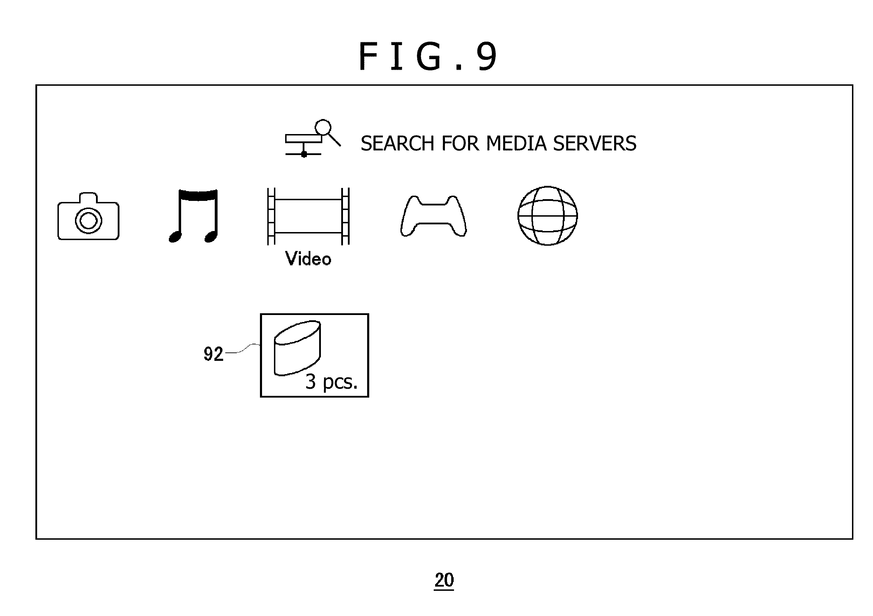

   Fig. 9 is a diagram showing another typical media server icon.
[Fig. 10]

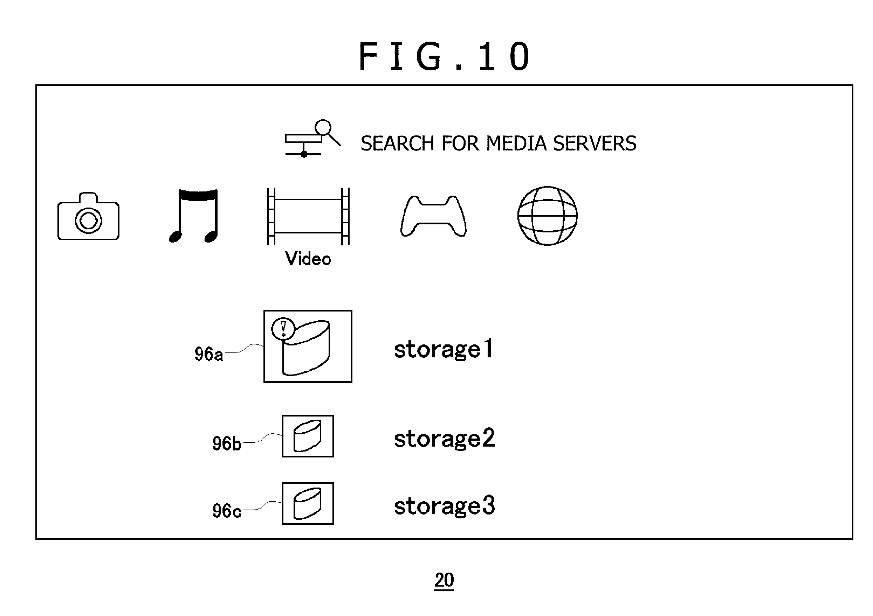

   Fig. 10 is a diagram showing another typical media server icon.
[Fig. 11]

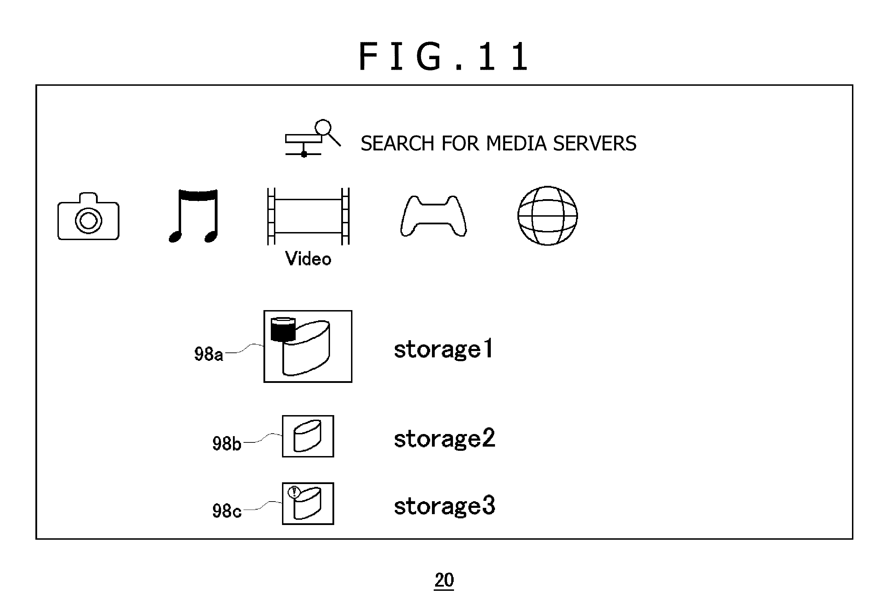

   Fig. 11 is a diagram showing another typical media server icon.

### [Description of Embodiment]

The information processing system of this embodiment proposes a storage device equipped with NAS and recorder functions. A single storage device doubling as a NAS and a PVR saves installation space and offers enhanced flexibility in maintenance. The storage device does not have a user interface for recorder use. Instead, a dedicated application is installed into a client device that gains access to the storage device so that the client device provides a user interface for recorder use. According to this information processing system, raising the number of storage devices connected with the network makes it easy to increase the storage capacity of the entire system. Because the client device provides the user interface for recorder use, a user can operate the storage device or devices using the same user interface regardless of the number of storage devices configured.

In the information processing system of this embodiment, the storage device profiting from its NAS function offers media server functionality to provide client devices with the content recorded by a recorder function, and general-purpose file server functionality. When acting as a media server, the storage device distributes recorded content to the information processing device used by the user. Incidentally, in addition to the recorded content, the media server may also record pieces of music, photos, movies, etc., for viewing by the user.

Fig. 1 is a diagram outlining a configuration of an information processing system 1 as one embodiment of the present invention. In the information processing system 1, an information processing device 20 and storage devices 10a, 10b and 10c (they will be referred to as the storage device 10 hereunder where not distinguished from one another) are connected to a network 3 formed in an indoor system 5. Although multiple storage devices 10a, 10b and 10c are shown in the indoor system 5, there may alternatively be one storage device 10. Whereas one information processing device 20 is shown in the indoor system 5, there may alternatively be multiple information processing devices 20.

The storage device 10 has the NAS and the recorder functions. The storage device 10 has hard disk drives that may offer a storage capacity of larger than 300 GB, for example. The storage device 10 may be composed of recording media other than hard disk drives, such as a flash memory. Although not connected to a display device, the storage device 10 incorporates LEDs giving operating status and other indications to the user. In the information processing system 1, the storage device 10 functions as a media server that stores and distributes multiple types of content such as still images, moving images, and pieces of music. The information processing device 20 compatible with DLNA (Digital Living Network Alliance) can access the storage device 10 to acquire and reproduce recorded content therefrom. The storage device 10 may also function as a general-purpose file server.

In order to implement its recorder function, the storage device 10 is connected to an antenna 2 and has a three-wave tuner that supports a terrestrial digital broadcast wave, a BS digital broadcast wave, and a CS digital broadcast wave. In the overall structure of the network environment shown in Fig. 1, a broadcast signal from the antenna 2 is branched before being input to the individual storage devices 10a through 10c. As another example, each storage device 10 may be equipped with an antenna input terminal and an antenna output terminal; the antenna input terminal of the storage device 10a may be connected to the antenna 2; the antenna output terminal of the storage device 10a may be connected to the antenna input terminal of the storage device 10b; and the antenna output terminal of the storage device 10b may be connected to the antenna input terminal of the storage device 10c, so that the storage devices 10a, 10b and 10c may receive the broadcast signal.

In this embodiment, the storage device 10 operates as a single-tuner PVR capable of recording one TV program at a time. In the information processing system 1, one storage device 10 connected to the network 3 functions as a single-tuner PVR; two storage devices 10 connected to the network 3 function as a double-tuner PVR; and three storage devices 10 connected to the network 3 function as a triple-tuner PVR. Raising the number of connected storage devices 10 increases the number of TV programs that can be recorded simultaneously and also boosts the storage capacity of the information processing system 1. As described, this embodiment offers a highly extensible information processing system 1 of which the number of tuners and the storage capacity can be increased by simply installing additional storage devices 10. Since the storage device 10 also functions as an ordinary file server, the ease of increasing storage capacity also entails boosting the flexibility of the embodiment as a NAS system.

The information processing device 20 is a DLNA-compatible device that incorporates a content reproduction function and is connected to a display device, or configured to include a display device. The information processing device 20 may be a stationary video game machine or a desktop personal computer which is connected to the display device. Further, the information processing device 20 may be a display-integrated portable video game machine or a laptop personal computer.

The information processing device 20 accesses the media server function of the storage device 10 and acquires and reproduces recorded content files therefrom. The information processing device 20 may also be connected to the network 3 via a relay device 4 in wired or wireless fashion. In the indoor system 5, the relay device 4 may be a hub or a switch that relays information between devices on the network 3. The relay device 4 of this embodiment has a router function for connecting to an external network. The router function built in the relay device 4 allows the storage device 10 and information processing device 20 to connect to the Internet 6 that is an external network. Incidentally, the relay device 4 of this embodiment is configured as a so-called wireless LAN router that has a wireless LAN communication function as well as the router function.

In the information processing system 1, a management server 7 is connected to the Internet 6. The storage device 10 is connected to the management server 7 via the relay device 4 over the Internet 6. The management server 7 is managed and maintained by a business operator that runs the information processing system 1. The management server 7 holds the latest system software to be installed into the storage device 10.

The system software of the storage device 10 is managed by use of version information. The storage device 10 accesses the management server 7 periodically to check the system software for updates. The storage device 10 queries the management server 7 for the latest version information, and compares the most recent version information with the version information about the system software currently installed in the storage device 10. If the version information about the system software in the storage device 10 is not up to date at this point, the storage device 10 downloads the latest system software from the management server 7. Whereas the storage device 10 checks the system software automatically for updates and performs the download process automatically without instructions from the user, the downloaded system software is not installed automatically. The system software is installed only if the user issues an explicit instruction to do so.

The information processing device 20 installs a dedicated application to control the recorder function of the storage device 10 with a view to providing the user with a user interface for operating the storage device 10 as a PVR. This allows the user to utilize the storage device 10 as a recorder; the user interface offered by the information processing device 20 permits such operations as recording reservation of TV programs and viewing of recorded TV programs. The dedicated application for operating the recorder may alternatively be provided by the management server 7.

Where multiple storage devices 10 are connected to the network 3, each storage device 10 is managed using the recorder operation application installed in the information processing device 20. Because it has no user interface for recorder use, the storage device 10 need not have a video output and thus can be manufactured at low cost. Also, the user need only connect the storage device 10 to the network 3 to increase the storage capacity of the information processing system 1 and the number of TV programs that can be recorded simultaneously, so that a remarkably highly flexible information processing system 1 may be provided.

In the information processing system 1, the storage device 10 is a DLNA server that distributes recorded content to the information processing device 20. The information processing device 20 is a DLNA client that receives content distributed from the storage device 10. The information processing device 20 incorporates a media player and has the capability to reproduce content files provided by the storage device 10.

Fig. 2 shows functional blocks of the storage device 10. The storage device 10 includes an information acquisition unit 30, a status management unit 32, an icon selection unit 34, an icon providing unit 36, a recording processing unit 38, a content distribution unit 40, and a storage unit 50.

The recording processing unit 38 records broadcast programs and stores the recorded content to the storage unit 50 that is a large-capacity hard disk drive. In addition to the recorded content, the storage unit 50 may also store the content downloaded from external servers or the like. When requested by the information processing device 20 acting as a DLNA client, the content distribution unit 40 distributes designated content to the information processing device 20. The basic operation of the storage device 10 as a media sever has been described above. The operations of the information acquisition unit 30, status management unit 32, icon selection unit 34, and icon providing unit 36 will be discussed later.

In terms of hardware components, the structure of the storage device shown in Fig. 2 may be implemented using the CPU and a memory of a suitable computer together with programs loaded in the memory, for example. Shown in this drawing are the functional blocks implemented by coordinating these components. It is thus obvious to those skilled in the art that these functional blocks are implemented in diverse forms using only hardware, only software, or a combination of both.

Fig. 3 shows functional blocks in the information processing device 20. The information processing device 20 includes an instruction reception unit 60, a search processing unit 62, an icon acquisition unit 64, a display processing unit 66, and a content reproduction unit 68. When the power supply of the information processing device 20 is turned on, the search processing unit 62 automatically searches for a DLNA server (storage device 10) connected on the network 3. At this point, the display processing unit 66 generates display data for displaying on a menu screen an icon image indicative of the detected storage device 10, and causes the display to display the menu screen.

Fig. 4 is a diagram explaining a basic structure of a menu screen. On this menu screen, icons arrayed horizontally represent the functional categories of the information processing device 20, and icons arrayed vertically express the processing items that can be executed under each category. On the menu screen, the user may operate an input interface to scroll a desired icon into the position of a selection area 82. In this manner, the icons displayed on the menu screen may be subjected to a selection operation or a determination operation. For example, if the information processing device 20 is a video game machine, the input interface is a game controller; if the information processing device 20 is a personal computer, the input interface is a mouse and a keyboard. In this context, the selection operation refers to moving an icon into the selection area 82, and the determination operation refers to executing the process associated with the icon positioned in the selection area 82 by manipulating buttons or the like of the input interface.

Where three storage devices 10 are connected to the network 3, media server icons 80a, 80b and 80c representing these storage devices 10 are displayed on the menu screen shown in Fig. 4. In this example, it is assumed that the media server icon 80a represents the storage device 10a, the media server icon 80b represents the storage device 10b, and the media server icon 80c represents the storage device 10c. On the right-hand side of the media server icons 80a, 80b and 80c are the media server names "storage 1," "storage 2" and "storage 3" naming the storage devices 10a, 10b and 10c, respectively. Whereas other types of media servers besides the storage devices 10 may also be configured, the media server icons representing those other media servers are not shown in the drawing.

The media server icon 80a is shown positioned in the selection area 82. When the user pushes a determination button of the input interface, the instruction reception unit 60 receives the determination instruction. The display processing unit 66 generates display data for displaying in list form the icon of the content to be stored into the storage device 10a and the name of the content in question.

Fig. 5 is a diagram explaining a basic structure of the menu screen for displaying a content list. Shown here is a content list 84 stored in the storage device 10a. It is indicated here that two pieces of content named "movie 1" and "movie 2" are stored in the storage device 10a. When the user selects content from the content list 84, the instruction reception unit 60 receives the selection instruction. The content reproduction unit 68 acquires and reproduces the content of interest from the storage device 10.

In terms of hardware components, the structure of the information processing device 20 shown in Fig. 3 may be implemented using the CPU and a memory of a suitable computer together with programs loaded in the memory, for example. Shown in this drawing are the functional blocks implemented by coordinating these components. It is thus obvious to those skilled in the art that these functional blocks are implemented in diverse forms using only hardware, only software, or a combination of both.

In the information processing system 1 of this embodiment, connecting additional storage devices 10 to the network 3 increases the number of tuners for the recorder function as well as the storage capacity. Thus, in the information processing system 1, the user may presumably connect multiple storage devices 10 to the network 3. When the search processing unit 62 searches for a DLNA server in the indoor system 5 shown in Fig. 1, three storage devices 10a, 10b and 10c are detected. At this point, the menu screen shown in Fig. 4 indicates the media server icons 80a, 80b and 80c arrayed side by side.

In an ordinary information processing system, the information processing device holds beforehand the media server icons corresponding to the types of media servers configured. When the media servers are detected by a search, the icons representing the media servers are displayed on a menu screen. In the information processing system 1 of this embodiment, if an icon is displayed for each detected media server as shown in Figs. 4 and 5 and if, say, 10 storage devices are connected to the network 3, 10 media server icons of the same kind would be displayed side by side. Since the number of icons that can be displayed on a single screen of the display is limited, if there exist multiple storage devices 10, preferably there should be provided a scheme that displays icon images allowing the user intuitively to know the presence of the multiple storage devices 10.

Meanwhile, as shown in Figs. 4 and 5, displaying multiple media server icons side by side continues to provide a highly valuable user interface that makes the presence of the individual media servers known to the user. At this point, while the status of these media server may or may not be identical, it is difficult for the user to grasp the status of each media server with only the display of the icons assigned to different types of media servers and with only the display of their media server names. For example, one media server may have the latest system software installed therein, while another media server may have yet to get the most recent system software installed. Still another media server may have a sufficient free space on its hard disk drive, while yet another media server may have little free space left on its hard disk drive. If multiple media server icons are to be displayed side by side on the menu screen, preferably there should be provided a scheme that displays icon images allowing the user intuitively to grasp the status of the storage devices 10 configured.

In the storage device 10, the status management unit 32 acquires status information related to the storage device 10. The status information is acquired from either outside or inside of the storage device 10 and may typically include the following details:
(1) whether any other storage device 10 is connected to the network 3;
(2) whether the latest system software to be installed is held in the management server 7; and
(3) whether the free space of the storage unit 50 is becoming insufficient.

The storage unit 50 stores multiple pieces of content, and holds an icon table that associates the status of the storage devices 10 with icon images. When the status management unit 32 acquires the status information about the storage device 10, the icon selection unit 34 selects from the icon table an icon image corresponding to the acquired status information. The icon providing unit 36 notifies the information processing device 20 that an icon change has occurred, and provides the selected icon image to the information processing device 20. When the icon acquisition unit 64 in the information processing device 20 acquires the icon image, the display processing unit 66 therein generates display data for displaying the acquired icon image on the menu screen, and causes the display to display the icon image.

Fig. 6 is a flowchart of an icon setting process performed by the storage device 10. In the information processing system 1, the storage device 10 generally remains switched on. The status management unit 32 in the storage device 10 monitors the media server for a change in status ("N" in S10). When the status management unit 32 acquires status information related to the media server ("Y" in S10), the icon selection unit 34 selects from the icon table the icon image corresponding to the acquired status information (S12).

Later, when the power supply of the information processing device 20 is turned on (S14), the search processing unit 62 searches for and detects a DLNA server connected to the network 3 (S16). The icon acquisition unit 64 transmits an icon image acquisition request to the storage device 10 (S18). The icon providing unit 36 transmits the selected icon image to the information processing device 20 (S20). The display processing unit 66 displays the acquired icon image on the menu screen (S22).

In the meantime, the status management unit 32 continuously monitors the media server for a change in status ("N" in S24). When the status management unit 32 acquires new status information related to the media server ("Y" in S24), the icon selection unit 34 selects from the icon table the icon image corresponding to the acquired status information (S26). The icon providing unit 36 notifies the information processing device 20 that an icon image change has taken place (S28). Upon receipt of the notification, the icon acquisition unit 64 transmits an icon image acquisition request to the storage device 10 (S30). When the icon providing unit 36 transmits the selected icon image to the information processing device 20 (S32), the display processing unit 66 replaces the currently displayed icon image with the acquired icon image and displays the menu screen (S34).

Some typical icon images to be displayed are explained below.

### <Icon indicative of multiple media servers>

Fig. 7 is a diagram showing a typical media server icon. This media server icon 90 depicts three media servers.

If multiple storage devices 10 are configured in the information processing system 1, one storage device 10 operates as a parent server and the other storage devices 10 act as child servers. Specifically, the storage device 10a connected initially to the network 3 operates as the parent server, and the storage devices 10b and 10c connected later to the network 3 act as the child servers. If the power supply of the storage device 10a is turned off, either the storage device 10b or the storage device 10c operates as the parent server. In any case, one storage device 10 functions as the parent server that manages the child servers configured. It is assumed here that the storage device 10a is the parent server.

The information acquisition unit 30 acquires information from outside the storage device 10. On the basis of the information acquired by the information acquisition unit 30, the status management unit 32 acquires status information related to the storage device 10. In this example, the information acquisition unit 30 of the storage device 10a operating as the parent server acquires information indicative of the presence of child servers from these child servers. In turn, the status management unit 32 of the storage device 10a acquires as status information the presence of the other storage devices 10b and 10c connected to the network 3. Thus, the status management unit 32 holds as status information the connection of three media servers including the own server on the network 3.

The icon table associates the number of the storage devices 10 configured on the network 3 with corresponding icon images. Specifically, where two storage devices 10 are configured, an icon image depicting the two storage devices 10 is associated therewith; where three storage devices 10 are configured, an icon image depicting the three storage devices 10 is associated therewith. The same applies where four or more storage devices are configured. By referencing the icon table, the icon selection unit 34 selects the icon image corresponding to the status information managed by the status management unit 32. In this example, the media server icon 90 depicting three media servers is selected. The icon providing unit 36 provides the selected icon image to the information processing device 20. At this point, in addition to the icon image, the icon providing unit 36 provides the information processing device 20 with the media server names of the storage devices 10a, 10b and 10c expressed by the icon image as well. In the information processing device 20, the icon acquisition unit 64 acquires the media server icon 90 and the media server names. The display processing unit 66 generates display data for displaying the media server icon 90 and the media server names on the menu screen, and causes the display to display the menu screen. In this manner, the multiple media server icons 80a, 80b and 80c displayed on the menu screen shown in Fig. 4 can be rearranged into one media server icon 90 that allows the user easily to verify the status of the storage devices 10 being configured.

On the menu screen shown in Fig. 7, the media server icon 90 is positioned in the selection area 82. If the user pushes the determination button of the input interface at this point, the instruction reception unit 60 receives the determination instruction. The display processing unit 66 generates display data for displaying in list form the icons indicative of the pieces of content stored in the storage devices 10a, 10b and 10c, and causes the display to display the list.

Fig. 8 shows a typical menu screen for displaying the content list. In this example, a content list 94 stored in the storage devices 10a, 10b and 10c is shown. For example, suppose that two pieces of content named "movie 1" and "movie 2" are stored in the storage device 10a; a piece of content named "movie 3" is stored in the storage device 10b; and a piece of content named "movie 4" is stored in the storage device 10c. Where the user performs the determination operation on the media server icon 90 representing the presence of multiple storage devices 10 as in this example, the pieces of content stored in these storage devices 10 may be displayed in list form. This allows the user to access and view content without becoming aware of the individual storage devices 10.

Fig. 9 is a diagram showing another typical media server icon. This media server icon 92 describes the number of media servers configured. As the number of storage devices 10 connected to the network 3 is being raised, it may become difficult to express the device count pictorially. In such a case, the number of storage devices 10 may be stored in association with the icon describing the device count in the icon table.

The media server icons 90 and 94 in the examples above were shown to represent the presence of multiple storage devices 10. The storage device 10a as the parent server was shown to provide the icon image to the information processing device 20. In the ensuing example where multiple storage devices 10 are configured, each of the storage devices 10 provides an icon image representative of its own status to the information processing device 20.

### <Icon drawing the user's attention>

Fig. 10 shows another typical media server icon. An exclamation mark is shown attached to this media server icon 96a.

The information acquisition unit 30 accesses the management server 7 periodically to verify whether or not there is any system software for updates. The information acquisition unit 30 queries the management server 7 for the version information about the latest system software, acquires the latest version information, and also acquires the version information about the system software currently installed in the storage device 10a. If the version information about the currently installed system software is not up to date, the information acquisition unit 30 notifies the status management unit 32 that the management server 7 holds the latest system software to be installed. In turn, the status management unit 32 acquires as status information the possibility for the storage device 10a to update the system software.

In the icon table, the status in which the storage device 10 can update its system software is associated with the media server icon 96a accompanied by the exclamation mark. By referencing the icon table, the icon selection unit 34 selects the icon image corresponding to the status information managed by the status management unit 32. In this example, the media server icon 96a is selected. The icon providing unit 36 provides the information processing device 20 with the selected icon image together with the media server name. In the information processing device 20, the icon acquisition unit 64 acquires the media server icon 96a and the media server name. The display processing unit 66 displays the media server icon 96a and the media server name on the menu screen. Viewing the media server icon 96a allows the user to recognize that the storage device 10a whose media server name is "storage 1" is in a state in which the system can be updated.

On the menu screen shown in Fig. 10, the media server icon 96a is positioned in the selection area 82. If the user pushes the determination button of the input interface at this point, the instruction reception unit 60 receives the determination instruction. The display processing unit 66 may cause the display to display a user interface screen on which the system of the storage device 10a is to be updated.

On the menu screen in Fig. 10, media server icons 96b and 96c are apparently not different from the media server icons 80b and 80c shown in Fig. 4. However, these icons are different in that the media server icons 80b and 80c are prepared beforehand by the information processing device 20 while the media server icons 96b and 96c are provided respectively by the storage devices 10b and 10c to the information processing device 20. Incidentally, the user may set, by default, different icons for the different storage devices 10 in order to distinguish the individual storage devices 10 from one another by the icons.

### <Icon giving notification of free space>

Fig. 11 shows another typical media server icon. This media server icon 98a is accompanied by a mark (HDD mark) indicating that the free space on the hard disk drive is insufficient.

The status management unit 32 acquires storage status of the storage unit 50. The status management unit 32 monitors the free space of the storage unit 50 and, if the free space is found to be less than a predetermined value, acquires as status information the insufficiency of the free space. In the icon table, the insufficiency of the free space is associated with the media server icon 98a accompanied by the HDD mark. By referencing the icon table, the icon selection unit 34 selects the icon image corresponding to the status information managed by the status management unit 32 in accordance with the free space of the storage unit 50. In this example, the media server icon 98a is selected. Given different degrees of insufficiency of the free space, there may be provided differently graded media server icons. For example, the status management unit 32 may hold multiple threshold values. When the free space is found to be less than each of these threshold values, the icon image corresponding to the status in question may be selected by the icon selection unit 34.

The icon providing unit 36 provides the information processing device 20 with the selected icon image together with the media server name. In the information processing device 20, the icon acquisition unit 64 acquires the media server icon 98a and the media server name. The display processing unit 66 displays the media server icon 98a and the media server name on the menu screen. Viewing the media server icon 968 allows the user to recognize that the storage device 10a whose media server name is "storage 1" has an insufficient free space.

Fig. 11 also shows a media server icon 98b set by default as well as a media server icon 98c accompanied by an exclamation mark.

As described above, when the media server provides the icon image representing its own status to the information processing device 20, the information processing device 20 can display the media server icon indicative of the status of the media server with no need to query the media server for status. Such display constitutes a user interface that allows the user easily to grasp the media server status.

The present invention has been described above using a specific embodiment. This embodiment is only an example, and it is to be understood by those skilled in the art that many variations and modifications may be made to the composing elements and processes discussed above and that these variations and modifications also fall within the scope of the present invention.

The status information about the storage device 10 may indicate that the system software has yet to be updated and that the free space of the storage device 10 is insufficient. The icon table may then be arranged to hold the icon image accompanied by the exclamation mark and HDD ark in association with this status information so that the icon selection unit 34 may select that icon image.

Also, the states of the storage device 10 may be prioritized so that the icon selection unit 34 may select icon images according to priority. For example, suppose that state 1 is a state in which the free space is insufficient and that state 2 is a state in which the current system software has yet to be updated to the latest system software. In this case, state 1 is higher in priority than state 2. When the status information about the storage device 10 indicates that the system software has yet to be updated and that the free space is insufficient, the icon selection unit 34 recognizing the existence of states 1 and 2 selects state 1 of the higher priority, and selects from the icon table the media server icon 98a corresponding to the selected state 1. Where state priorities are set in a manner alerting the user in stages, the user is easily able to know immediately whether or not the status of the storage device 10 should be improved.

It was also explained above in connection with the embodiment that the media server provides the icon image representing its own status to the information processing device 20. However, the media server should preferably prepare various icon images. For example, the media server may prepare beforehand an icon image indicating that the user is viewing content, an icon image indicating that recording is underway, an icon image indicating that energy-saving mode is in effect, an icon image indicating that a TV program reserved for recording is not found, an icon image that varies with dates and hours, an icon image that varies in shape with continuous use, and the like. The media server may then provide a suitable icon image or images representing its status to the information processing device 20.

### [Reference Signs List]

1 ··· Information processing system, 3 ··· Network, 7 ··· Management server, 10 ··· Storage device, 20 ··· Information processing device, 30 ··· Information acquisition unit, 32 ··· Status management unit, 34 ··· Icon selection unit, 36 ··· Icon providing unit, 38 ··· Recording processing unit, 40 ··· Content distribution unit, 50 ··· Storage unit, 60 ··· Instruction reception unit, 62 ··· Search processing unit, 64 ··· Icon acquisition unit, 66 ··· Display processing unit, 68 ··· Content reproduction unit.

### [Industrial Applicability]

The present invention may be applied to an information processing system in which a server and clients are interconnected via a network.

## Claims

1. An information processing system comprising a media server, and an information processing device interconnected with one another via a network,
wherein the media server includes
a storage unit configured to record content,
a status management unit configured to acquire status information related to the media server, and
an icon selection unit configured to select an icon image corresponding to the status information acquired by the status management unit, and
the information processing device includes
an icon acquisition unit configured to acquire the icon image selected by the media server, and
a display processing unit configured to generate display data for displaying the acquired icon image.

2. The information processing system according to claim 1,
wherein the status management unit acquires storage status of the storage unit, and
the icon selection unit selects an icon image corresponding to a free space of the storage unit.

3. The information processing system according to claim 1 or 2,
wherein the media server further includes an information acquisition unit configured to acquire information from the outside, and
the status management unit acquires the status information related to the media server on the basis of the acquired information.

4. The information processing system according to claim 3,
wherein the status management unit acquires as status information the possibility for the media server to update system software, and
the icon selection unit selects an icon image corresponding to the acquired status information.

5. The information processing system according to claim 3 or 4,
wherein the status management unit acquires as status information the connection of any other information processing device on the network, and
the icon selection unit selects an icon image corresponding to the acquired status information.

6. A media server for distributing content, the media server comprising:
a status management unit configured to acquire status information related to the media server;
an icon selection unit configured to select an icon image corresponding to the status information acquired by the status management unit; and
an icon providing unit configured to provide the selected icon image.

7. A program for causing a computer distributing content to implement:
a function of acquiring status information related to the computer;
a function of selecting an icon image corresponding to the acquired status information; and
a function of providing the selected icon image.

8. A computer-readable storage medium which stores the program according to claim 7.
